# EUROPEAN PATENT SPECIFICATION

(11) **EP 0 582 917 B1**
(45) Date of publication and mention of the grant of the patent: **07.11.2001**
(21) Application number: 93112260.0
(22) Date of filing: 30.07.1993
(51) Int. Cl.: B01D 53/34, B01D 53/04, F01N 3/08

(54) **An exhaust gas purification device for an engine**
Vorrichtung zur Reinigung von Abgas eines Motors
Dispositif pour la purification de gaz d'échappement pour un moteur

(30) Priority: 04.08.1992 JP 20809092
(43) Date of publication of application: 16.02.1994
(73) Proprietor: TOYOTA JIDOSHA KABUSHIKI KAISHA, Aichi-ken 471-8571 (JP)
(72) Inventor: Goto, Masato, Toyota-shi, Aichi-ken (JP); Iguchi, Satoshi, Toyota-shi, Aichi-ken (JP); Katoh, Kenji, Toyota-shi, Aichi-ken (JP); Kihara, Tetsuro, Toyota-shi, Aichi-ken (JP)
(74) Representative: Tiedtke, Harro, Dipl.-Ing.

(56) References cited:
- EP-A- 0 287 217
- EP-A- 0 540 280
- WO-A-93/07363
- WO-A-93/12863
- DE-A- 3 502 866
- DE-A- 3 509 035
- DE-A- 4 008 371
- US-A- 4 047 895
- US-A- 4 315 895
- PATENT ABSTRACTS OF JAPAN vol. 014, no. 395 (M-1016)27 August 1990 & JP-A-02 149 715 (MAZDA MOTOR CORP) 8 June 1990
- DATABASE WPI Section Ch, Week 8727, Derwent Publications Ltd., London, GB; Class E36, AN 87-188551 & JP-A-62 117 620 (NIPPON SHOKUBAI KAGAKU) 29 May 1987
- DATABASE WPI Section Ch, Week 8639, Derwent Publications Ltd., London, GB; Class E36, AN 86-254801 & JP-A-61 181 538 (MATSUSHITA ELEC IND KK) 14 August 1986
- DATABASE WPI Section Ch, Week 8628, Derwent Publications Ltd., London, GB; Class E36, AN 86-178825 & JP-A-61 111 127 (EBARA INFILCO KK) 29 May 1986

## Description

### BACKGROUND OF THE INVENTION

### 1. Field of the Invention

The present invention relates to an exhaust gas purification device for an engine.

### 2. Description of the Related Art

With respect to an engine in which a lean air-fuel mixture is burned, the same applicant has proposed a new type of engine in which a NOₓ absorbent is arranged in the exhaust passage of the engine. This NOₓ absorbent absorbs the NOₓ when the air-fuel ratio of the exhaust gas flowing into the NOₓ absorbent is lean, and this NOₓ absorbent releases the absorbed NOₓ when the air-fuel ratio of exhaust gas flowing into the NOₓ absorbent becomes rich. In this engine, the NOₓ produced when the lean air-fuel mixture is burned is absorbed by the NOₓ absorbent. The air-fuel ratio of the exhaust gas flowing into the NOₓ absorbent is temporarily made rich before the absorbing ability of the NOₓ absorbent is saturated, and at this time, the NOₓ is released from the NOₓ absorbent. In addition, at this time, the NOₓ thus released is reduced (See U.S. Patent Application No. 66,100 derived from PCT application JP92/01279).

However, since sulphur is contained in fuel and lubricating oil of the engine, sulphur oxides SOₓ is contained in the exhaust gas and, in the above-mentioned engine, SOₓ is absorbed in the NOₓ absorbent together with NOₓ. Nevertheless, even if the air-fuel ratio of the exhaust gas flowing into the NOₓ absorbent is made rich, SOₓ thus absorbed is not released from the NOₓ absorbent, and thus the amount of SOₓ stored in the NOₓ absorbent is gradually increased. However, if the amount of SOₓ stored in the NOₓ absorbent is increased, the amount of NOx which the NOx absorbent is able to absorb is gradually reduced, and thus a problem arises in that NOx cannot be absorbed in the NOx absorbent.

From document EP 0 540 280 A1 an exhaust purification apparatus of an internal combustion engine is known which has a NOx absorption and release material in an exhaust passage and a heater provided close to the NOx absorption and release material. When NOx absorption operation continues for a predetermined period, the heater is switched on to rise the temperature of the NOx absorption and release material above a predetermined temperature to release absorbed NOx and thereby regenerate the absorption and release material.

The document US-A-4 047 895 describes an exhaust gas purification device comprising sulphur trapping means upstream of an NOx absorbent.

### SUMMARY OF THE INVENTION

The object underlying the invention is to provide an exhaust gas purification device for an engine having a NOx absorbent and being capable of maintaining a high absorbing ability of this NOx absorbent for a longer operation time period.

This object is solved by the features of claim 1. According to the invention, a NOx absorbent is arranged in the exhaust passage of the engine to absorb NOx when an air-fuel ratio of exhaust gas flowing into the NOx absorbent is lean, and to release an absorbed NOx when a concentration of oxygen in the exhaust gas flowing into said NOx absorbent is lowered. Further, a sulphur trapping means is arranged in the exhaust passage upstream of said NOx absorbent to trap SOx contained in the exhaust gas. An air-fuel ratio control means is provided for controlling said air-fuel ratio of the exhaust gas to make the ratio lean when NOx is to be absorbed in the NOx absorbent, and to make the ratio rich when a time period during which a lean air-fuel mixture is burnt, exceeds a fixed time period to achieve the release of the NOx from said NOx absorbent.

Advantageous further developments of the invention are described in the subclaims. By the features of the invention, the following advantage can be achieved. Due to the invention it is possible to maintain the absorption ability of a NOx absorbent even under different working conditions of the engine by enriching the air-fuel ratio by means of an air-fuel ratio control means in suitable time intervals to achieve a release of absorbed NOx and thereby a regeneration of the NOx absorbent.

### BRIEF DESCRIPTION OF THE DRAWINGS

In the drawings:
Fig. 1 is an overall view of an engine;
Fig. 2 is a diagram showing the concentration of unburned HC and CO and O₂ in the exhaust gas; and
Figs. 3A and 3B are views for explaining an absorbing and releasing operation of NOₓ.

### DESCRIPTION OF A PREFERRED EMBODIMENT

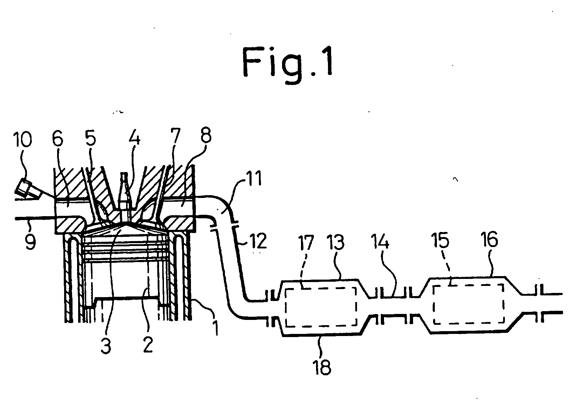

Referring to Figure 1, reference numeral 1 designates an engine body, 2 a piston, 3 a combustion chamber, and 4 a spark plug; 5 designates an intake valve, 6 an intake port, 7 an exhaust valve, and 8 an exhaust port. The intake port 6 is connected to the surge tank (not shown) via a corresponding branch pipe 9, and a fuel injector 10 injecting the fuel toward the interior of the intake port 6 is attached to each branch pipe 9. The exhaust port 8 is connected to a sulphur trapping device 13 via an exhaust manifold 11 and an exhaust pipe 12, and the sulphur trapping device 13 is connected to a casing 16 including a NOₓ absorbent 18 via an exhaust pipe 14. In the engine illustrated in Fig. 1, the air-fuel ratio of the air-fuel mixture fed into the combustion chamber 3 is normally made learn, and thus a lean air-fuel mixture is normally burned in the combustion chamber 3.

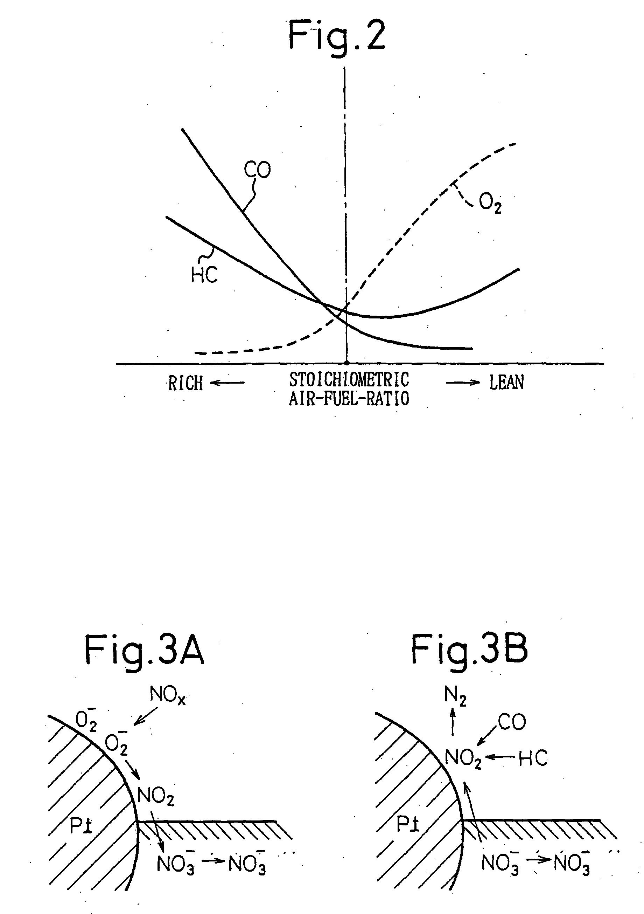

Figure 2 schematically shows the concentration of representative components in the exhaust gas discharged from the combustion chamber 3. As seen from Fig. 2, the concentration of the unburnt HC and CO in the exhaust gas discharged from the combustion chamber 3 is increased as the air-fuel ratio of the air-fuel mixture fed into the combustion chamber 3 becomes richer, and the concentration of the oxygen O₂ in the exhaust gas discharged from the combustion chamber 3 is increased as the air-fuel ratio of the air-fuel mixture fed into the combustion chamber 3 becomes leaner.

The NOₓ absorbent 15 contained in the casing 16 uses, for example, alumina as a carrier. On this carrier, at least one substance selected from alkali metals, for example, potassium K, sodium Na, lithium Li, and cesium Cs; alkali earth metals, for example, barium Ba and calcium Ca; and rare earth metals, for example, lanthanum La and yttrium Y and precious metals such as platinum Pt is carried. When referring to the ratio between the air and fuel (hydrocarbons) fed into the intake passage of the engine and the exhaust passage upstream of the NOₓ absorbent 15 as the air-fuel ratio of the inflowing exhaust gas to the NOₓ absorbent 15, this NOₓ absorbent 15 performs the absorption and releasing operation of NOₓ by absorbing the NOₓ when the air-fuel ratio of the inflowing exhaust gas is lean, while releasing the absorbed NOₓ when the concentration of oxygen in the inflowing exhaust gas falls. Note that, where the fuel (hydrocarbons) or air is not fed into the exhaust passage upstream of the NOₓ absorbent 15, the air-fuel ratio of the inflowing exhaust gas coincides with the air-fuel ratio of the air-fuel mixture fed into the combustion chamber 3, and accordingly in this case, the NOₓ absorbent 15 absorbs the NOₓ when the air-fuel ratio of the air-fuel mixture fed into the combustion chamber 3 is lean and releases the absorbed NOₓ when the concentration of oxygen in the air-fuel mixture fed into the combustion chamber 3 is lowered.

When the above-mentioned NOₓ absorbent 15 is disposed in the exhaust passage of the engine, this NOₓ absorbent 15 actually performs the absorption and releasing operation of NOₓ, but there are areas of the exact mechanism of this absorption and releasing operation which are not clear. However, it can be considered that this absorption and releasing operation is conducted by the mechanism as shown in Figs. 3A and 3B. This mechanism will be explained by using as an example a case where platinum Pt and barium Ba are carried on the carrier, but a similar mechanism is obtained even if another precious metal, alkali metal, alkali-earth metal, or rare-earth metal is used.

Namely, when the inflowing exhaust gas becomes very lean, the concentration of oxygen in the inflowing exhaust gas is greatly increased. At this time, as shown in Fig. 3A, the oxygen O₂ is deposited on the surface of the platinum Pt in the form of O₂⁻. At this time, the NO in the inflowing exhaust gas reacts with the O₂⁻ on the surface of the platinum Pt and becomes No₂(2NO + O₂ → 2NO₂). Subsequently, a part of the produced NO₂ is oxidized on the platinum Pt and absorbed into the absorbent. While bonding with the barium oxide BaO, it is diffused in the absorbent in the form of nitric acid ions NO₃⁻ as shown in Fig. 3A. In this way, NOₓ is absorbed into the NOₓ absorbent 15.

So long as the oxygen concentration in the inflowing exhaust gas is high, the NOₓ is produced on the surface of the platinum Pt, and so long as the NOₓ absorption ability of the absorbent is not saturated, the NOₓ is absorbed into the absorbent and nitric acid ions NO₃⁻ are produced. Contrary to this, when the oxygen concentration in the inflowing exhaust gas is lowered and the production of NO₂ is lowered, the reaction proceeds in an inverse direction (NO₃⁻ → NO₂), and thus nitric acid ions NO₃⁻ in the absorbent are released in the form of NO₂ from the absorbent. Namely, when the oxygen concentration in the inflowing exhaust gas is lowered, the NOₓ is released from the NOₓ absorbent 15. As shown in Fig. 2, when the degree of leanness of the inflowing exhaust gas becomes low, the oxygen concentration in the inflowing exhaust gas is lowered, and accordingly when the degree of leanness of the inflowing exhaust gas is lowered, the NOₓ is released from the NOₓ absorbent 15 even if the air-fuel ratio of the inflowing exhaust gas is lean.

On the other hand, at this time, when the air-fuel ratio of the air-fuel mixture fed into the combustion chamber 3 is made rich and the air-fuel ratio of the inflowing exhaust gas becomes rich, as shown in Fig. 2, a large amount of unburnt HC and CO is discharged from the engine, and these unburnt HC and CO react with the oxygen O₂⁻ on the platinum Pt and are oxidized. Also, when the air-fuel ratio of the inflowing exhaust gas becomes rich, the oxygen concentration in the inflowing exhaust gas is extremely lowered, and therefore the NO₂ is released from from the absorbent. This NO₂ reacts with the unburnt HC and CO as shown in Fig. 3B and is reduced. In this way, when the NO₂ no longer exists on the surface of the platinum Pt, the NO₂ is successively released from the absorbent. Accordingly, when the air-fuel ratio of the inflowing exhaust gas is made rich, the NOₓ is released from the NOₓ absorbent 15 in a short time.

As mentioned above, when the air-fuel ratio of the inflowing exhaust gas is made lean, NOₓ is absorbed in the NOₓ absorbent 15 and, when the air-fuel ratio of the inflowing exhaust gas is made rich, NOₓ is released from the NOₓ absorbent 15 in a short time. Accordingly, in the engine illustrated in Fig. 1, when a time period during which a lean air-fuel mixture is burned exceeds a fixed time period, the air-fuel ratio of the air-fuel mixture fed into the engine cylinder is temporarily made rich to release NOₓ from the NOₓ absorbent 15.

However, SOₓ is contained in the exhaust gas, and not only NOₓ but also SOₓ are absorbed in the NOₓ absorbent 15. The mechanism of the absorption of SOₓ into the NOₓ absorbent 15 is considered to be almost the same as the absorption mechanism of NOₓ. Next, this absorption mechanism of SOₓ will be explained by using as an example a case where platinum Pt and barium Ba are carried on the carrier, as is the same manner as explaining the absorption mechanism of NOₓ.

Namely, as mentioned above, when the air-fuel ratio of the inflowing exhaust gas is lean, the oxygen O₂ is deposited on the surface of the platinum Pt in the form of O₂⁻. At this time, SO₂ in the inflowing exhaust gas reacts with the O₂⁻ on the surface of the platinum Pt and becomes SO₃. Subsequently, a part of the produced SO₃ is oxidized on the platinum Pt and absorbed into the absorbent. While bonding with the barium oxide BaO, it is diffused in the absorbent in the form of nitric acid ions SO₄²⁻, and sulfate BaSO₄ is produced.

However, this sulfate BaSO₄ is less easily dissociated and, even if the air-fuel ratio of the inflowing exhaust gas is made rich, this sulfate BaSO₄ remains as it stands without being dissociated. Accordingly, the amount of sulfate BaSO₄ increases as a time passes, and thus the amount of NOₓ which the NOₓ absorbent 15 is able to absorb is reduced as a time passes.

Therefore, in the present invention, to prevent SOₓ from flowing into the NOₓ absorbent 15, the sulphur trapping device 13 is arranged in the exhaust passage upstream of the NOₓ absorbent 15. In this case, since the NOₓ absorbent 15 absorbs SOₓ, but does not release SOₓ, an absorbent which is similar to the NOₓ absorbent 15 can be used for the sulphur trapping device 13. In the embodiment illustrated in Fig. 1, the sulphur trapping device 13 comprises a SOₓ absorbent 17 and a casing 18 surrounding the SOₓ absorbent 17, and the SOₓ absorbent 17 uses, for example, alumina as a carrier. On this carrier, at least one substance selected from alkali metals, for example, potassium K, sodium Na, lithium Li, and cesium Cs; alkali-earth metals, for example, barium Ba and calcium Ca; and rare-earth metals, for example, lanthanum La and yttrium Y and precious metals such as platinum Pt is carried.

In this case, with respect to the SOₓ absorbent 17, it is not necessary to take a good absorbing and releasing operation of NOₓ into consideration, but it is sufficient to take only a good trapping operation of SOₓ into consideration, and therefore, it is preferable that the amount of the above-mentioned alkali metals, alkali earth metals or rare earth metals, contained in the SOₓ absorbent 17 be increased as compared to the amount of those metals contained in the NOₓ absorbent 15. In addition, cerium Ce may be added to the SOₓ absorbent 17.

Where the SOₓ absorbent 17 is arranged in the exhaust passage upstream of the NOₓ absorbent 15 as illustrated in Fig. 1, the whole SOₓ discharged from the engine is absorbed in the SOₓ absorbent 17, and the SOₓ absorbed in the SOₓ absorbent 17 is not released even if the air-fuel ratio of air-fuel mixture fed into the combustion chamber 3 is made rich. Accordingly, only NOₓ is absorbed in the NOₓ absorbent 15, and thus it is possible to prevent a NOₓ absorbing ability of the NOₓ absorbent 15 from being reduced.

Therefore, according to the present invention, it is possible to maintain a high NOₓ absorbing ability of the NOₓ absorbent 15 even if the NOₓ absorbent 15 is used for a long time.

## Claims

1. An exhaust gas purification device for an engine having an exhaust passage, said device comprising:
a NOx absorbent (15) arranged in the exhaust passage, said NOx absorbent (15) being adapted to absorb NOx when an air-fuel ratio of exhaust gas flowing into the NOx absorbent is lean, and to release an absorbed NOx when a concentration of oxygen in the exhaust gas flowing into said NOx absorbent (15) is lowered,
sulphur trapping means (13) arranged in the exhaust passage upstream of said NOx absorbent (15), said sulphur trapping means (13) being adapted to trap SOx contained in the exhaust gas, and
air-fuel ratio control means for controlling said air-fuel ratio of exhaust gas to make said air-fuel ratio of exhaust gas lean when NOx is to be absorbed in said NOx absorbent and to make said air-fuel ratio of exhaust gas rich when a time period during which a lean air-fuel mixture is burned exceeds a fixed time period to release NOx from said NOx absorbent, wherein no heater is provided to rise the temperature of the NOx absorbent.

2. An exhaust gas purification device according to claim 1, wherein said sulphur trapping means (13) comprises a SOx absorbent which absorbs SOx therein.

3. An exhaust gas purification device according to claim 2, wherein said SOx absorbent contains at least one substance selected from alkali metals comprising potassium, sodium, lithium, cesium; alkali-earth metals comprising barium, calcium; and rare-earth metals comprising lanthanum, yttrium and contains platinum.

4. An exhaust gas purification device according to claim 3, wherein said NOx absorbent (15) contains at least one substance selected from alkali metals comprising potassium, sodium, lithium, cesium; alkali-earth metals comprising barium, calcium; and rare-earth metals comprising lanthanum, yttrium and contains platinum, and an amount of said metals contained in said SOx absorbent is larger than an amount of said metals contained in said NOx absorbent (15).

5. An exhaust gas purification device according to claim 1, wherein said air-fuel ratio control means controls said air-fuel ratio of exhaust gas by controlling an air-fuel ratio of air-fuel mixture fed into the engine.

6. An exhaust gas purification device according to claim 1, wherein said NOx absorbent (15) contains at least one substance selected from alkali metals comprising potassium, sodium, lithium, cesium; alkali-earth metals comprising barium, calcium; and rare-earth metals comprising lanthanum, yttrium and contains platinum.

## Patentansprüche

1. Abgasreinigungsvorrichtung für einen eine Abgasleitung aufweisenden Motor, mit:
einem in der Abgasleitung angeordneten NOₓ-Absorber (15), der dazu ausgelegt ist, NOₓ zu absorbieren, wenn das Luft-Kraftstoff-Verhältnis eines in den NOₓ-Absorber (15) strömenden Abgases mager ist, und absorbiertes NOₓ freizugeben, wenn die Sauerstoffkonzentration in dem in den NOₓ-Absorber (15) strömenden Abgas abnimmt,
einer in der Abgasleitung stromaufwärts vom NOₓ-Absorber (15) angeordneten Schwefeleinfangeinrichtung (13), die dazu ausgelegt ist, in dem Abgas enthaltenes SOₓ einzufangen, und
einer Luft-Kraftstoff-Verhältnis-Steuerungseinrichtung zur Steuerung des Luft-Kraftstoff-Verhältnisses des Abgases, um das Luft-Kraftstoff-Verhältnis mager zu machen, wenn in dem NOₓ-Absorber (15) NOₓ zu absorbieren ist, und das Luft-Kraftstoff-Verhältnis fett zu machen, wenn eine Zeitdauer, während der ein mageres Luft-Kraftstoff-Gemisch verbrannt wird, eine festgelegte Zeitdauer überschreitet, damit von dem NOₓ-Absorber, ohne dass ein Heizelement zur Erhöhung der Temperatur des NOₓ-Absorber vorgesehen ist, NOₓ freigegeben wird.

2. Abgasreinigungsvorrichtung nach Anspruch 1, bei der die Schwefeleinfangeinrichtung (13) einen SOₓ-Absorber umfasst, der darin SOₓ absorbiert.

3. Abgasreinigungsvorrichtung nach Anspruch 2, bei der der SOₓ-Absorber mindestens eine Substanz enthält, die aus Kalium, Natrium, Lithium, Caesium umfassenden Alkalimetallen; Barium, Calcium umfassenden Erdalkalimetallen und Lanthan, Yttrium umfassenden Seltenerdmetallen gewählt ist, und Platin enthält.

4. Abgasreinigungsvorrichtung nach Anspruch 3, bei der der NOₓ-Absorber (15) mindestens eine Substanz enthält, die aus Kalium, Natrium, Lithium, Caesium umfassenden Alkalimetallen; Barium, Calcium umfassenden Erdalkalimetallen und Lanthan, Yttrium umfassenden Seltenerdmetallen gewählt ist, und Platin enthält und bei der eine in dem SOₓ-Absorber enthaltene Menge dieser Metalle größer als eine in dem NOₓ-Absorber (15) enthaltene Menge dieser Metalle ist.

5. Abgasreinigungsvorrichtung nach Anspruch 1, bei der die Luft-Kraftstoff-Verhältnis-Steuerungseinrichtung das Luft-Kraftstoff-Verhältnis des Abgases steuert, indem das Luft-Kraftstoff-Verhältnis des in den Motor eingespeisten Luft-Kraftstoff-Gemischs gesteuert wird.

6. Abgasreinigungsvorrichtung nach Anspruch 1, bei der der NOₓ-Absorber (15) mindestens eine Substanz enthält, die aus Kalium, Natrium, Lithium, Caesium umfassenden Alkalimetallen; Barium, Calcium umfassenden Erdalkalimetallen und Lanthan, Yttrium umfassenden Seltenerdmetallen gewählt ist, und Platin enthält.

## Revendications

1. Un dispositif pour la purification de gaz d'échappement pour un moteur ayant un passage d'échappement, lequel dispositif comprenant :
un absorbant de NOx (15) disposé dans le passage d'échappement, ledit absorbant de NOx (15) étant adapté pour absorber NOx lorsqu'un rapport air-carburant de gaz d'échappement circulant dans l'absorbant de NOx est pauvre, et pour libérer un NOx absorbé lorsque la concentration d'oxygène dans le gaz d'échappement pénétrant dans ledit absorbant de NOx (15) est abaissée,
un moyen de piégeage de soufre (13) disposé dans le passage d'échappement en amont du dit absorbant de NOx (15), le dit moyen de piégeage de soufre (13) étant adapté pour piéger le SOx contenu dans le gaz d'échappement, et
un moyen de commande de rapport air-carburant pour contrôler le ledit rapport air-carburant de gaz d'échappement afin de rendre pauvre ledit rapport air-carburant de gaz d'échappement lorsque NOx doit être absorbé dans ledit absorbant de NOx et rendre riche ledit rapport air-carburant de gaz d'échappement lorsque la durée pendant laquelle un mélange air-carburant pauvre est brûlé dépasse une durée fixée pour la libération de NOx du dit absorbant de NOx, dans lequel aucun dispositif de chauffage n'est prévu pour élever la température de l'absorbant de NOx.

2. Un dispositif pour la purification de gaz d'échappement selon la revendication 1, dans lequel ledit moyen de piégeage de soufre (13) comprend un absorbant de SOx qui absorbe SOx qui y est contenu.

3. Un dispositif pour la purification de gaz d'échappement selon la revendication 2, dans lequel ledit absorbant de SOx contient le platine et au moins une substance choisie parmi les métaux alcalins comprenant le potassium, le sodium, le lithium, le césium ; les métaux alcalino-terreux comprenant le baryum, le calcium ; les métaux terres rares comprenant le lanthane, l'yttrium.

4. Un dispositif pour la purification de gaz d'échappement selon la revendication 3, dans lequel ledit absorbant de NOx (15) contient le platine et au moins une substance choisie parmi les métaux alcalins comprenant le potassium, le sodium, le lithium, le césium ; les métaux alcalino-terreux comprenant le baryum, le calcium ; les métaux terres rares comprenant le lanthane, l'yttrium, et une quantité des dits métaux contenus dans ledit absorbant de SOx est supérieure à une quantité des dits métaux contenus dans ledit absorbant de NOx (15).

5. Un dispositif pour la purification de gaz d'échappement selon la revendication 1, dans lequel ledit moyen de commande de rapport air-carburant commande ledit rapport air-carburant de gaz d'échappement en commandant le rapport air-carburant d'un mélange air-carburant alimenté dans le moteur.

6. Un dispositif pour la purification de gaz d'échappement selon la revendication 1, dans lequel ledit absorbant de NOx (15) contient le platine et au moins une substance choisie parmi les métaux alcalins comprenant le potassium, le sodium, le lithium, le césium ; les métaux alcalino-terreux comprenant le baryum, le calcium ; les métaux terres rares comprenant le lanthane, l'yttrium.
